(19) **Europäisches Patentamt**

**European Patent Office**

**Office européen des brevets**

(11) **EP 0 995 851 A2**

(12) **EUROPEAN PATENT APPLICATION**

(43) Date of publication:
26.04.2000 Bulletin 2000/17

(51) Int. Cl.⁷: **E04B 1/98**

(21) Application number: **99120096.5**

(22) Date of filing: **21.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.10.1998 JP 30239798**

(71) Applicant:
**MINNESOTA MINING AND MANUFACTURING COMPANY**
**St. Paul, Minnesota 55133-3427 (US)**

(72) Inventor: **Ookuma, Kiyoshi**
**Sagamihara-shi, Kanagawa-ken 229-1185 (JP)**

(74) Representative:
**VOSSIUS & PARTNER**
**Postfach 86 07 67**
**81634 München (DE)**

(54) **Damper**

(57)    A damper (10) is disclosed comprising two opposing support members (2a, 2b) and a vibration absorbing member made of a viscoelastic polymer material interposed between said support members, said vibration absorbing member comprising at least two vibration absorbing blacks (4a, 4b, 5a, 5b) of the viscoelastic polymer material of the same chemical family, wherein said respective vibration absorbing blocks have a different dynamic shear modulus from that of the adjacent vibration absorbing block and are arranged in parallel between said two support members.

Fig. 7

**Description**

The present invention relates to a damper, and more particularly to a damper, a so-called vibration control device, used in various structures such as a house, low-rise or high-rise building, bridge and gas tank (hereinafter generically referred to as a "structure") in order to protect the structures from vibrations caused by strong winds or earthquakes. When the damper of the present invention is used in a structure oscillating under the influence of wind or an earthquake, vertical and horizontal vibrations are absorbed by the elastic deformation of the vibration absorbing member constituting the damper of the present invention. Therefore, persons residing inside the structure or at the top thereof (residents) can be effectively prevented from feeling strong vibration, and equipment installed in the structure can be effectively prevented from moving or being damaged, while the aesthetic appearance of the structure can be improved.

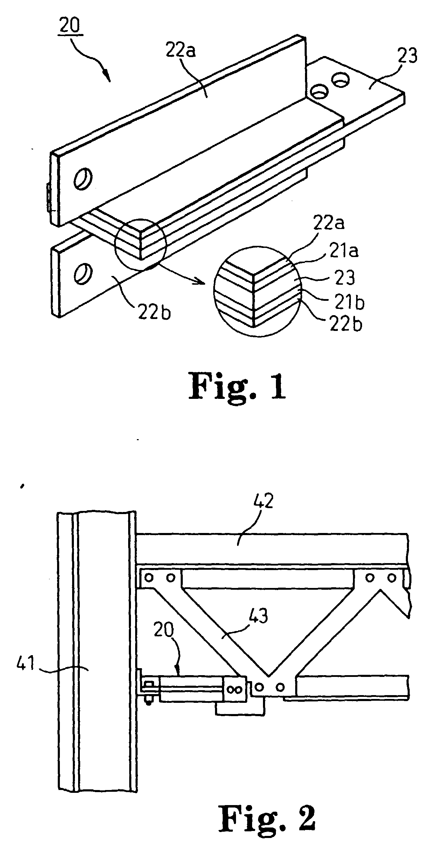

Various dampers have been suggested for the purpose of protecting structures from vibrations caused by strong winds and earthquakes. Japanese Examined Patent Publication (Kokoku) No. 51-1932, for example, suggests a vibration control unit for use in structures that are subject to vibrations of high speeds, wherein at least two members having a rigidity higher than that of steel and a thickness of 2.5 mm are separated by a viscoelastic material layer firmly bonded to the surfaces of the members. A vibration control unit of this type is used normally as part of a structural member stretched over a predetermined position of the structure and has a constitution as shown in Fig. 1. Namely, a vibration control unit 20 is composed of two T-shaped flange members 22a, 22b and an intermediate member (center plate) 23 positioned at a middle position between the flange members, while viscoelastic material layers 21a, 21b are arranged between the flange member 22a and the intermediate member 23 and between the flange member 22b and the intermediate member 23, respectively. In such a vibration unit, the flange member and the intermediate member can be made from steel sheets or the like, and the viscoelastic material layer can be made from a viscoelastic material having a shear strain of at least 10 % and a loss tangent of at least 0.3 when measured in one cycle of vibration, for example, polyether urethane or a copolymer of alkyl acrylate and one or more acrylic monomers such as acrylic acid, acrylamide and the like.

The vibration control unit 20 shown in Fig. 1 can be used to connect two positions of a structure, for example, as shown in Fig. 2. The figure shows the embodiment of the vibration control unit 20 fastened by means of bolts onto a column 41 of an external wall on a floor of a higher level in a high-rise building and a truss member 43 structurally tied to the column 41 at substantially the same level as a floor slab 42. When the vibration control unit as shown in the drawing is installed at a specified position in a structure, vibration transmitted to the position can be damped to a low level because the viscoelastic material layer is subject to shear deformation in the direction of thickness.

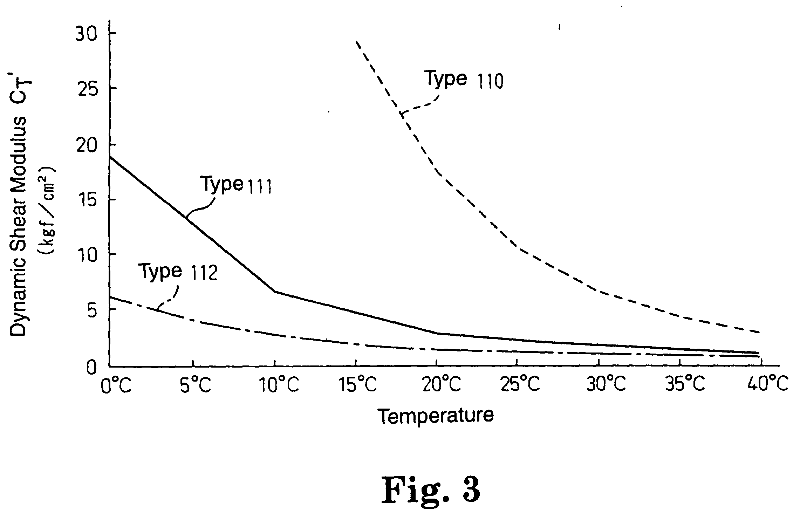

However, although various types of vibration control units such as described above are provided having viscoelastic material layers of different degrees of rigidity used therein, there has been such a problem that great care must be exercised when choosing the viscoelastic material to be used in order to obtain the optimum damping effect, because of temperature-variable characteristics of the materials, namely dynamic shear modulus G' represented by the real part of damping characteristic expressed in a complex number and the value of $\eta$ (loss factor) that is a non-dimensional quantity represented by the ratio of the imaginary part and the real part. Fig. 3 is a graph showing the temperature dependency of dynamic shear modulus G', under a vibration having a frequency of 1 Hz, of three kinds of viscoelastic materials, VEM type 110 (high rigidity), type 111 (intermediate rigidity) and type 112 (moderate rigidity), which are commercially available from Sumitomo 3M Co., Ltd. under the trade name of SCOTCHDAMP. As will be understood from the graph, these viscoelastic materials change the dynamic shear modulus G' thereof significantly with the temperature, showing that the temperature dependency is a critical factor in the selection of an optimum viscoelastic material.

Also such a vibration control unit causes a problem in the appearance of the structure when the viscoelastic material layer is exposed, and is therefore covered with a panel, fire-proof cover or a sheet and, when installed outdoors, provided with sealing to protect from rain. Therefore, there has been a demand for a vibration control unit which does not require such auxiliary arrangements.

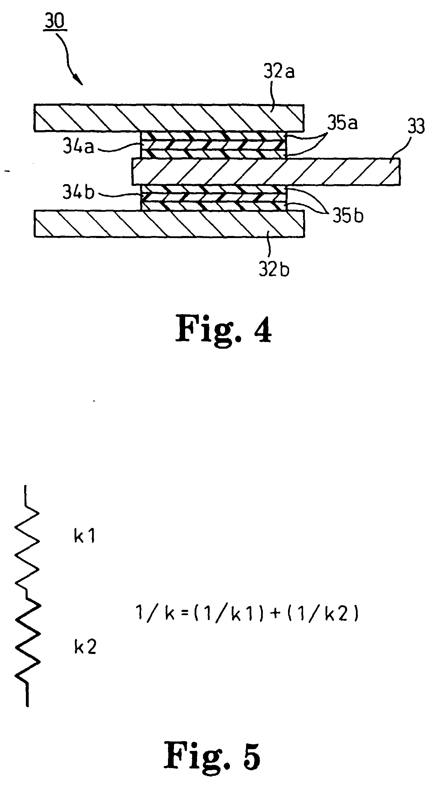

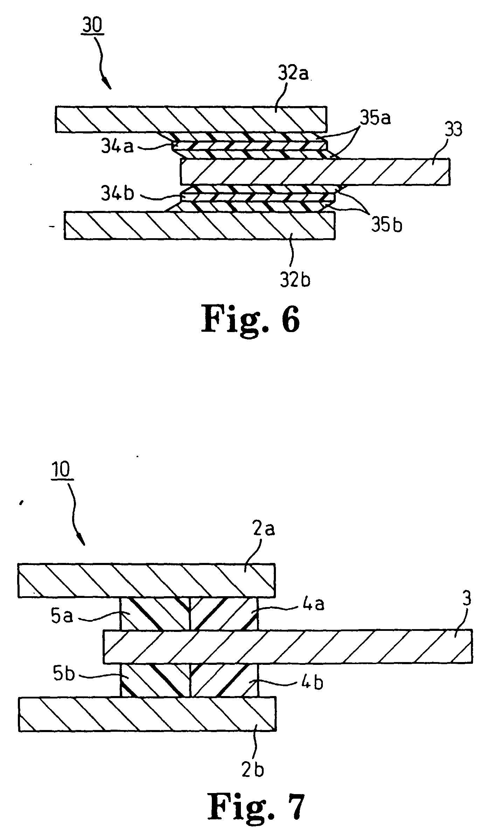

Further, in order to improve the vibration control effect, such a constitution may be conceived that the viscoelastic layer is made of a plurality of viscoelastic material layers laminated on another as shown in Fig. 4, instead of a single layer of viscoelastic material. In the embodiment shown in the figure, a vibration control unit 30 is constituted from two T-shaped flange members 32a, 32b and an intermediate member (center plate) 33 positioned at a middle position between the flange members, while laminated viscoelastic material layers 21a, 21b, namely a hard viscoelastic material layer 34a sandwiched by two soft viscoelastic material layers 35a and a hard viscoelastic material layer 34b sandwiched by two soft viscoelastic material layers 35b, are arranged between the flange member 32a and the intermediate member 33 and between the flange member 32b and the intermediate member 33, respectively. While the laminated viscoelastic material layers are assigned with different reference numerals, they can be generally made in the same constitution. When the viscoelastic material layers of the vibration control unit are arranged in a laminated structure as described above, shear deformation in the direction of thickness can be further improved. In this case, however, a new problem arises in that the soft viscoelastic material layer 35a is deformed earlier than the hard viscoelastic material layer 34a as shown in Fig. 6, and consequently a longer time is taken for the hard viscoelastic material layer 34a to deform. A similar problem occurs also in the lamination of the soft viscoelastic material layers 35b and the hard viscoelastic material layer 34b. Such a time lag in the deforming process of one viscoelastic material layer cannot be ignored, and is important in order to obtain good effect of controlling a vibration of a small amplitude. Moreover, employing the laminated structure described above does not solve the problem of temperature dependency. In this connection, the formation of the laminated structure by combining the viscoelastic materials having different properties has many drawbacks, that is, that a wide variety of viscoelastic materials have to be provided, and that many factors must be considered and, thus, it is difficult to find the most appropriate combination capable of providing an excellent damping effect. Also, generally speaking, the laminated constitution described above is more effective in controlling bending deformation or the like than shear deformation.

In consideration of the above problems, an object of the present invention is to provide a vibration control unit, namely a damper, which can provide excellent vibration control effect even in the case of weak vibration and has beautiful appearance without temperature dependency.

The present inventor attempted to solve the problems by taking notice of the possibility that the above problems are caused by such a constitution of the laminated viscoelastic material layers of the vibration control unit shown in Fig. 4 that the layers are connected in parallel as schematically shown in Fig. 5 in terms of the spring constant of the viscoelastic material.

As a result, the present inventors have found that the problems can be solved by means of a damper comprising two opposing support members and a vibration absorbing member made of a viscoelastic polymer material interposed between said support members, said vibration absorbing member comprising at least two vibration absorbing blocks of the viscoelastic polymer material of the same chemical family, wherein said respective vibration absorbing blocks have a different dynamic shear modulus from that of the adjacent vibration absorbing block and are arranged in parallel between said two support members, thus making it possible to achieve the object of the present invention. In the vibration absorbing member, it is preferred that the adjacent vibration absorbing blocks are bonded to each other.

Preferred embodiments of the invention will now be described in connection with the drawings.

Fig. 1 is a perspective view showing one embodiment of a conventional damper.

Fig. 2 is a side view showing an embodiment of using the damper of Fig. 1 in a building.

Fig. 3 is a graph showing the temperature dependency of the dynamic shear modulus G' of three kinds of commercially available viscoelastic materials under vibration having a frequency of 1 Hz.

Fig. 4 is a cross sectional view showing the arrangement of viscoelastic members in the damper of Fig. 1.

Fig. 5 is a schematic drawing explaining the arrangement of the viscoelastic members in the damper of Fig. 4 in terms of the spring constants of the members.

Fig. 6 is a cross sectional view showing the occurrence of plastic deformation of the viscoelastic members in the damper of Fig. 4

Fig. 7 is a cross sectional view showing the arrangement of viscoelastic members in one preferred embodiment of a damper of the present invention.

Fig. 8 is a schematic drawing explaining the arrangement of the viscoelastic members in the damper of Fig. 7 in terms of the spring constants of the members.

Fig. 9 is a perspective view showing still another preferred embodiment of the damper of the present invention.

Fig. 10 is an exploded view showing the constitution of the damper of Fig. 9.

Fig. 11 is a side view showing an example of application of the damper of Fig. 9 used in a building structure.

Fig. 12 is a perspective view showing a further preferred embodiment of the damper of the present invention.

The damper of the present invention has such a constitution that the vibration absorbing member made of the viscoelastic polymer material is interposed between two opposing support members. The opposing support members have no limitation as far as the use thereof achieves the damper function intended by the present invention and has no adverse effect. Also the sandwich structure of the two support members and the vibration absorbing member interposed therebetween may be constituted either from one set or two or more sets.

The support member must not have adverse effects on the strength and on other characteristics of the structure when the damper inclusive thereof is used in the structure, and is, therefore, preferably made of a hard and tough material. Materials suitable for the support member include steel, stainless steel and reinforced plastic materials commonly used for structural members, but not limited thereto.

The shape and size of the support member can vary according to the desired shape of the damper, damper installation position in the structure, desired level of aesthetic appearance and other factors. For example, the support member may have any shape suitable for the desired shape of the damper, for example, square columnar, plate-like, columnar or cylindrical shape. In the case of a square columnar or plate-like damper, for example, rectangular, a plate-like support member can be advantageously used. In the case of a columnar or cylindrical damper, a cylindrical or annular support member can be advantageously used.

More specifically, according to a preferred embodiment of the damper of the present invention, the support members are composed of plate-like members and a plate-like vibration absorbing member of a series of rectangular vibration absorbing blocks is interposed between said plate-like support members. Each of the vibration absorbing blocks is formed from a viscoelastic polymer material of the same chemical family. A damper comprising three or more plate-like support members, with a plate-like vibration absorbing member being interposed between said respective plate-like support members, is more preferred. The number of plate-like support members used may widely vary depending on the installation site of the damper and desired effects, and also its upper limit is not specifically defined. Further, it is preferred that each vibration absorbing block is bonded to each other without producing a gap.

According to still another embodiment of the damper of the present invention, the support member is a cylindrical member and a hollow cylindrical support member of a series of annular vibration absorbing blocks is interposed between said cylindrical support members. Each vibration absorbing blocks is formed from a viscoelastic polymer material of the same chemical family. The cylindrical support member may be constituted either from a single body extending over the entire length of the damper, or a plurality of pieces that collectively make up a single cylindrical support member. In this embodiment, it is also preferred that each vibration absorbing block is bonded to each other without producing a gap in the bonding section.

In addition to the shape, size of the support member may also vary widely. Providing diverse sizes improves convenience since the needs of construction firms can be readily met. The support member may have a dimension in the longitudinal direction as small as about 1m to about 10m or longer.

The damper of the present invention has the vibration absorbing member made of a viscoelastic polymer material interposed between the support members, wherein the vibration absorbing member is made of at least two vibration absorbing blocks of a viscoelastic polymer material of the same chemical family, unlike the conventional dampers, and the vibration absorbing blocks having a dynamic shear modulus different from that of the adjacent vibration absorbing block are arranged in parallel between the two support members. That is, the damper of the present invention has the vibration absorbing member, used along with the support members, which consists of a vibration absorbing block made of a relatively hard viscoelastic polymer material, namely having a high rigidity (namely high dynamic shear modulus G') and a vibration absorbing block made of a softer viscoelastic polymer material, namely having a lower rigidity (namely low dynamic shear modulus G') arranged side by side, with the vibration absorbing blocks being interposed between the two support members in parallel. While the term "vibration absorbing block" used herein ordinarily refers to one block, two or more blocks may be regarded as one block provided that the blocks have the same or substantially the same dynamic shear modulus in case a plurality of blocks are used.

In the damper of the present invention, the vibration absorbing member consists of a combination of at least two vibration absorbing blocks, or in general a combination of vibration absorbing blocks of different levels of hardness such as a combination of a hard vibration absorbing block and a soft vibration absorbing block. The hard vibration absorbing block and the soft vibration absorbing block may be used in diverse combinations. That is, as far as the hard vibration absorbing block and the soft vibration absorbing block are arranged between the two support members in parallel, blocks having two different levels of hardness may be arranged alternately or a plurality of blocks of the same hardness arranged consecutively may be followed by a plurality of vibration absorbing blocks having a hardness different from that of the former blocks, or otherwise two or more blocks of different levels of hardness may be arranged alternately in a similar technique as the above. In any case, for the damper of the present invention, since the vibration absorbing blocks are formed by combining the viscoelastic material of the same chemical family, it enables easy formation of the above-described alternate arrangement for obtaining an excellent damping effect. Further, the bonding of the adjacent vibration absorbing blocks is also suitable in an improvement of the damping function because each block can fully provide its function.

From another point of view, the alternate arrangement of the hard vibration absorbing block and the soft vibration absorbing block may also be implemented by considering what amplitude of relative positional displacement is to take place between the support members when a vibration is damped by the resultant damper.

In the combination of the vibration absorbing blocks of different levels of hardness as described above, the difference in the hardness of the adjacent vibration absorbing blocks is preferably at least 1.2 times or more in terms of the ratio $G_1'/G_2'$ of the dynamic shear modulus ($G_1'$) of the hard vibration absorbing block (made of a hard viscoelastic polymer material) to the dynamic shear modulus ($G_2'$) of the soft vibration absorbing block (made of a soft viscoelastic polymer material). A sample used in the measurement of the ratio $G_1'/G_2'$ of dynamic shear modulus comprises an internal cylindrical support member having a relatively small diameter and an outer cylindrical support member having a relatively large diameter, while a hollow cylindrical vibration absorbing member made of a hard annular vibration absorbing block or a soft annular vibration absorbing block is interposed between the two support members. With this constitution, the following equations are referred to.

$$\frac{A_1}{t}\,G_1' = \frac{A_2}{t}\,G_2'$$

and

$$G_1' = 2G_2'$$

Hence,

$$2A_1 = A_2$$

where

> $t$ is a thickness of a hard annular vibration absorbing block or a soft annular vibration absorbing block;
> $A_1$ is an area of a part of the hard annular vibration absorbing block making contact with the internal cylindrical support member, namely a side area of the inside of the annular vibration absorbing block; and
> $A_2$ is an area of a part of the soft annular vibration absorbing block making contact with the internal cylindrical support member, namely a side area of the inside of the annular vibration absorbing block. Assuming the ratio of the dynamic shear modulus $G_1'$ and $G_2'$ is $G_1' : G_2' = 2:1$, the area of a part of the hard annular vibration absorbing block making contact with the internal cylindrical support member is required to be twice that of the soft annular vibration absorbing block. There is no upper limit to the ratio of the hardness of the adjacent vibration absorbing blocks in the present invention.

There is no limitation to the viscoelastic polymer material used in forming the vibration absorbing member of the damper of the present invention and various natural or synthetic viscoelastic polymer materials can be used, as far as the viscoelastic polymer material can satisfy the above-described requirements and can transform the vibration energy into thermal energy by means of the viscosity resistance thereof and effectively damp the vibration. Appropriate viscoelastic polymer materials are therefore natural and synthetic rubbers, for example, butyl rubber, polyether urethane or a copolymer of alkyl acrylate and one or more acrylic monomers such as acrylic acid, acrylamide and the like. As a viscoelastic polymer material, four kinds of commercially available viscoelastic materials, VEM type 110 (high rigidity), type 111 (intermediate rigidity), type 112 (moderate rigidity) and type 113 (low rigidity), which are commercially available from Sumitomo 3M Co., Ltd. under the trade name of SCOTCHDAMP, can be used in any combinations advantageously. Further, the vibration absorbing member used in the damper of the present invention is formed by combining viscoelastic polymer material of the same chemical family, particularly in consideration of their rigidity.

Examples

Examples of the present invention will be described below with reference to the accompanying drawings.

Fig. 7 is a cross sectional view showing one preferred embodiment of the damper of the present invention. In the embodiment shown in the figure, the damper (vibration control unit) 10 comprises a first support member 2a and a second support member 2b, both having T-flange shape, and an intermediate support member (center plate) 3 positioned and arranged between the former two members. A combination of a vibration absorbing block 4a made of a hard viscoelastic polymer material and a vibration absorbing block 5a, made of a soft viscoelastic polymer material, bonded to the block 4a and a combination of a vibration absorbing block 4b made of a hard viscoelastic polymer material and a vibration absorbing block 5b, made of a soft viscoelastic polymer material, bonded to the block 4b are arranged in parallel via a layer of an adhesive (not shown) between the first support member 2a and an intermediate support member 3 and between the second support member 2b and the intermediate support member 3. The viscoelastic polymer materials used herein are of the same chemical family, although they have been modified to obtain different hardness. In the embodiment, only the combination of the vibration absorbing block 4a and the vibration absorbing block 5a and the combination of the vibration absorbing block 4b and the vibration absorbing block 5b are shown for the ease of comprehension, but the combination of the blocks may be freely changed as described previously. Also the adhesive material used as the bonding means may be omitted, or fastening means such as bolts may be used instead. Further, although not shown, the support members may be provided with bolt holes or other means for the connection with columns, beams, or the like, of the structure.

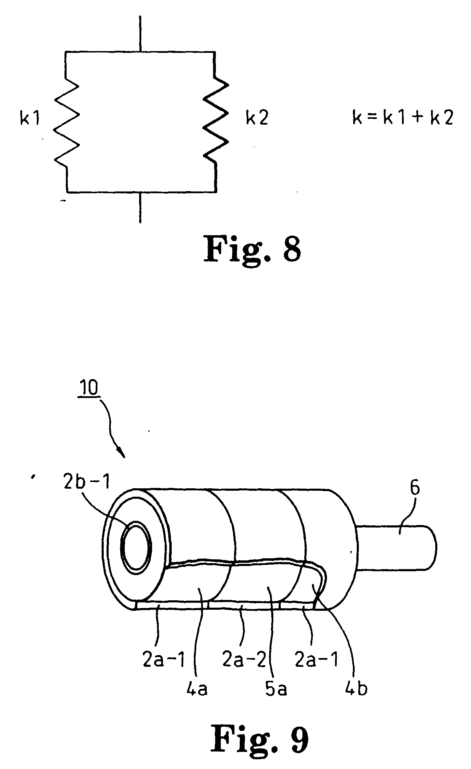

When the vibration absorbing block 4a made of the hard viscoelastic polymer material and the vibration absorbing block 5a made of the soft viscoelastic polymer material or the vibration absorbing block 4b made of the hard viscoelastic polymer material and the vibration absorbing block 5b made of the soft viscoelastic polymer material are arranged in contact with each other as shown in Fig. 7, arrangement of the viscoelastic polymer materials becomes parallel as schematically shown in Fig. 8.

Fig. 9 is a perspective view showing another preferred embodiment of the damper of the present invention. The damper 10 has a cylindrical shape, and only a part of the damper (three annular vibration absorbing blocks) is shown for simplicity. The first annular vibration absorbing block has such a constitution that the annular vibration absorbing block 4a made of the hard viscoelastic polymer material is interposed between an outer cylindrical support member 2a-1 and an inner cylindrical support member 2b-1, the second annular vibration absorbing block has such a constitution that the annular vibration absorbing block 5a made of the soft viscoelastic polymer material is interposed between an outer cylindrical support member 2a-2 and an inner cylindrical support member (not shown), and the third annular vibration absorbing block has a constitution similar to that of the first annular vibration absorbing block wherein the annular vibration absorbing block 4b made of the hard viscoelastic polymer material is interposed between the outer cylindrical support member 2a-1 and an inner cylindrical support member (not shown). Thus, the annular vibration absorbing blocks 4a, 5a and 4b are bonded with each other and arranged in parallel with the surrounding cylindrical support member when viewed as a whole. These annular vibration absorbing blocks are pivoted by a common rod 6 that penetrates the central portions thereof. Also the annular vibration absorbing blocks are preferably covered with a steel pipe or reinforced plastic pipe and may be rendered a proper color, for the reason of aesthetic consideration.

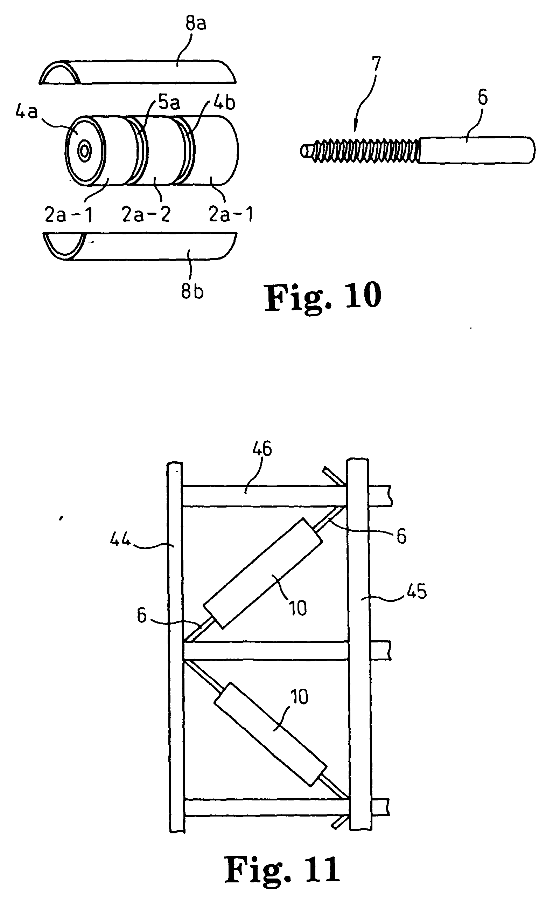

Fig. 10 is an exploded view of the damper of Fig. 9 for easier understanding of the constitution. The annular vibration absorbing blocks are integrally connected by a male screw 7 of the rod 6, and the hollow cylindrical vibration absorbing member thus formed is covered as a whole by half steel pipes 8a and 8b. The inner cylindrical support member may have a female thread formed in the inner surface thereof corresponding to the male screw 7 of the rod 6 for better convenience of operation. Although half steel pipes 8a and 8b are used in the example shown, a whole steel pipe may also be used instead, as required, and use of the outer cylindrical support member may be omitted in case the steel pipe provides sufficient strength.

The damper 10 of Fig. 9, when used in a building structure, may be installed in a space surrounded by columns 44, 45 and a beam 46 via the rods 6 alternately, for example, as shown in Fig. 11. Installation of the rod 6 onto the columns and the beams may be done by means of bolts and nuts not shown, The damper 10 configured as described above is capable of most efficiently damping vibrations because shear deformation is constant in the direction of thickness of the annular vibration absorbing block made of the viscoelastic polymer material.

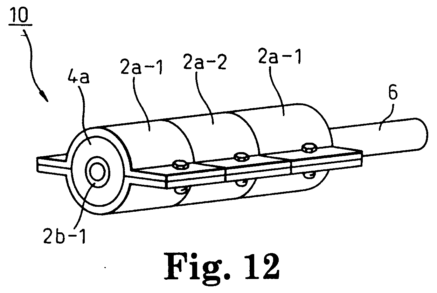

Fig. 12 is a perspective view showing still another preferred embodiment of the damper according to the present invention similar to the damper shown in Fig. 9. In the damper 10, the outer cylindrical support members 2a-1 and 2a-2 consist of half steel pipes with flanges fastened by means of bolts and nuts. The flanges may also be bonded by means of an adhesive (not shown) instead of bolts and nuts. Further, such a constitution may be employed as a hinge is attached to the flanges around which one of the flanges can swing open and close, instead of fastening the ends of the support members with bolts and nuts. Further, in the case of the example shown, the support members play the role of the covers 8a, 8b of Fig. 9.

As described above, according to the present invention, there is provided a damper capable of exerting good vibration control effect against vibrations of small amplitudes as well as large amplitudes when a structure is subject to vibration caused by earthquake or strong wind, with the vibration control effect not dependent on the temperature. Further, for the damper of the present invention, since each vibration absorbing block is formed from the viscoelastic polymer material of the same chemical family, a suitable combination of such materials for obtaining an excellent damping effect can be easily established. Bonding of the adjacent vibration absorbing blocks is also suitable for the damping function. Furthermore, the damper of the present invention, because of its functional and simple constitution, does not deteriorate the appearance of the structure even when used as it is, and is capable of eliminating such troubles as covering the damper, applying a fire-proof coverage and applying water-proof arrangement. The cylindrical damper, in particular, has good appearance when used in a lobby of a building or the like while being exposed to the eyes of the public.

**Claims**

1. A damper comprising:

   two opposing support members; and
   a vibration absorbing member made of a viscoelastic polymer material interposed between said support members, said vibration absorbing member comprising at least two vibration absorbing blocks of the viscoelastic polymer material of the same chemical family, wherein said respective vibration absorbing blocks have a different dynamic shear modulus from that of the adjacent vibration absorbing block and are arranged in parallel between said two support members.

2. The damper according to claim 1, wherein the adjacent vibration absorbing blocks in the vibration absorbing member are bonded to each other.

3. The damper according to claim 1 or 2, wherein a difference in dynamic shear modulus of said adjacent vibration absorbing blocks is at least 1.2 times or more.

4. The damper according to any of claims 1 to 3, wherein said support members are plate-like members and a plate-like vibration absorbing member of a series of rectangular vibration absorbing blocks is interposed between said plate-like support members.

5. The damper according to claim 4, which comprises three or more plate-like support members, with a plate-like vibration absorbing member being interposed between said respective plate-like support members.

6. The damper according to any of claims 1 to 3, wherein said support member is a cylindrical member and a hollow cylindrical support member of a series of annular vibration absorbing blocks is interposed between said cylindrical support members.

Fig. 1

Fig. 2

**Fig. 3**

**Fig. 4**

$$1/k = (1/k1) + (1/k2)$$

**Fig. 5**

<u>30</u>

32a

34a

35a

33

34b

35b

32b

# Fig. 6

<u>10</u>

2a

5a

4a

3

5b

4b

2b

# Fig. 7

$$k = k1 + k2$$

## Fig. 8

## Fig. 9

8a

4a    5a    4b

2a-1    2a-2    2a-1

8b

7    6

## Fig. 10

46

44    6

6    10

45

10

## Fig. 11

Fig. 12